# EUROPÄISCHE PATENTANMELDUNG

(11) **EP 1 432 221 A1**
(43) Veröffentlichungstag der Anmeldung: **23.06.2004**
(21) Anmeldenummer: 02023552.9
(22) Anmeldetag: 22.10.2002
(51) Int. Cl.: H04M 9/08, H04B 3/23

(54) **Echo-Unterdrückung mit geringer Verzögerung**

(71) Anmelder: Siemens Aktiengesellschaft, 80333 München (DE); Siemens Mobile Communications S.p.A., 20126 Milano (IT)
(72) Erfinder: Beaugeant, Christophe, Dr., 81735 München (DE); Beluffi, Renato, 20161 Milano (IT); Herbert Heiss, Dr., 82178 Puchheim (DE); Jäger, Bernd, 81373 München (DE); Prati, Luca, 44100 Ferrara (IT); Seitter, Norbert, 82008 Unterhaching (DE)

(57) **Zusammenfassung**

Eine effiziente Verringerung für die Zeitverzögerung bei der Echo-Entzerrung in einem Telekommunikationsnetz wird ermöglicht durch ein Verfahren zur Verringerung eines Echos in von einem Endgerät (2, 3) eines Telekommunikationsnetzes (6,8) kommenden uplink-Daten (19 bis 22), wobei von vom Telekommunikationsnetz (6, 8) in Richtung des Endgeräts (3) zu übertragenden downlink-Daten (13) eine downlink-Daten-Kopie (25) erstellt wird, welche downlink-Daten-Kopie (25) umcodiert (Transcoder 18) und zur Verringerung (10) des Echos in uplink-Daten (21) verwendet wird,
während downlink-Daten (13) in Richtung des Endgerätes (2, 3) übertragen werden (6).

## Beschreibung

Die Erfindung betrifft ein Verfahren und eine Vorrichtung zur Verringerung von in (über ein Telekommunikationsnetz zu übertragenden, von einem Endgerät kommenden) uplink-Daten enthaltenem Echo.

In unterschiedlichsten Telekommunikationsnetzen (insbesondere zellularen Mobilfunknetzen wie GSM, UMTS, CDMA-basierten Netzen etc.) kann in von einem Endgerät in Richtung des Mobilfunknetzes gesandten Daten (uplink-Daten) ein "Echo" auftreten, welches dadurch entstehen kann, dass am Endgerät von einem Lautsprecher ausgegebene akustische Signale (welche auf vom Netz an das Endgerät übertragenen downlink-Daten basieren) ausgegeben und in mehr oder weniger schwacher Form vom Mikrofon des Endgerätes aufgenommen werden. Das Mikrofon des Endgerätes empfängt also akustische Signale vom das Endgerät benutzenden, aktuell sprechenden (oder das Mobilfunkendgerät in anderer Weise benutzenden) Endgerät-Nutzer und zusätzlich ein schwaches Störgeräusch in Form des vom Lautsprecher des Endgerätes wiedergegebenen (als downlink-Daten vom Netz am Endgerät angekommenen) Sprachanteils eines Gesprächspartners des Endgerät-Nutzers. Die vom Mikrofon aufgenommenen Sprachdaten des Endgerät-Nutzers und die zusätzlich vom Mikrofon aufgenommenen (Stör-) Daten die ein Mikrophon im bzw. für das Endgerät aufgenommen hat, werden gemeinsam an den Gesprächspartner des Endgerät-Nutzers übertragen, so dass dieser zusätzlich zu dem Sprachsignal des Endgerät-Nutzers seine eigene Sprache als Echo hört (also die Sprachsequenz des Endgerät-Nutzer-Gesprächspartners, welche von diesem zum Lautsprecher des Endgeräts, zum Mikrofon und vom Mikrofon über das Endgerät zurück zum Gesprächspartner übertragen wurde).

Hierfür wurden in Mobilfunknetzen (aus beispielsweise www.etsi.org etc. oder Jacek Biala "Mobilfunk und intelligente Netze", Vieweg-Verlag, ISBN 3-528-15302-4, Seiten 109, 127 und 344 bekannte) Echo-Entzerrer (= Echo Canceller = Echo-Kompensator) vorgeschlagen. In einer Vermittlungseinrichtung eines Mobilfunknetzes kommen die Daten in der Regel über ATM-AAL-2 Verbindungen oder andere Verbindungen an, wobei die Daten in einem Mobilfunk-Codec-Format (insbesondere AMR-Format) zur komprimierten Übertragung insbesondere über die Luftschnittstelle codiert sind. Für die Echo-Entzerrung wird die im Codec-Format codierte Sprache in ein die Sprache beispielsweise über den Zeitverlauf repräsentierendes Format wie das TDM (Time Devision Multiplex)-Format transcodiert (also hinsichtlich der Codierung umgewandelt) und das in vom Endgerät kommenden uplink-Daten enthaltene Echo (der downlink-Daten) wird durch Berücksichtigung der downlink-Daten in den uplink-Daten möglichst weitgehend verringert (Echocancellation). Durch Vermeidung dieses Echos wird die Sprachqualität erheblich verbessert. Jedoch wird durch diesen Vorgang die Übertragung von vom Endgerät stammenden uplink-Daten zu einem Gesprächspartner über das Telekommunikationsnetz ebenso wie die Übertragung von von einem Gesprächspartner stammenden Daten über das Telekommunikationsnetz als downlink-Daten zum Endgerät verzögert.

Aufgabe der vorliegenden Erfindung ist es, bei einer Verringerung des Echos in von einem Endgerät kommenden uplink-Daten die Verzögerung von Daten durch die Echo-Verringerung (Echocancellation) möglichst effizient zu optimieren. Die Aufgabe wird jeweils durch die Gegenstände der unabhängigen Ansprüche gelöst.

Indem erfindungsgemäß die zum Endgerät zu sendenden Daten (downlink-Daten) kopiert und als Original oder in Kopie an das Endgerät gesandt werden, während eine Kopie oder das Original der downlink-Daten transcodiert zur Verringerung des Echos in uplink-Daten verwendet wird, kommen die downlink-Daten einerseits ohne Verzögerung beim Endgerät an und können andererseits einfach und effizient in an sich bekannter Weise ohne Umbau von Echo-Entzerrern zur Verringerung des Echos in uplink-Daten verwendet werden.

Weitere Merkmale und Vorteile der Erfindung ergeben sich aus den Ansprüchen und der nachfolgenden Beschreibung eines Ausführungsbeispiels anhand der Zeichnung. Dabei zeigt
- Figur 1: schematisch die an sich bekannte Entstehung eines Echos,
- Figur 2: eine erfindungsgemäße Echo-Entzerrung in einem Telekommunikationsnetz und
- Figur 3: eine erfindungsgemäße Verringerung des Echos unter Vermeidung von Verzögerung bei der Übertragung von downlink-Daten.

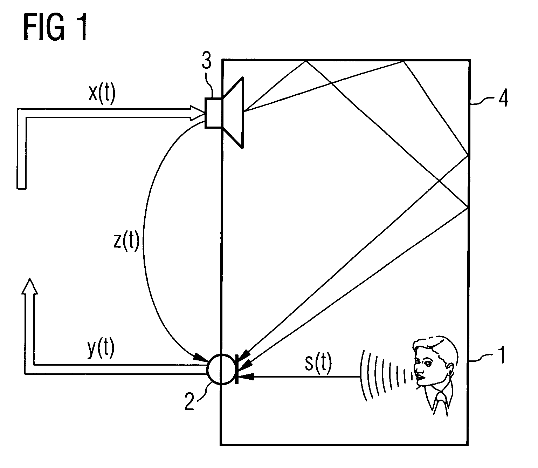

Figur 1 zeigt einen Nutzer 1 eines (nicht dargestellten) ein Mikrofon 2 und einen Lautsprecher 3 umfassenden Endgerätes welches (2,3) sich z.B. in einem Fahrzeug oder Raum 4 befindet. Der zu seinem Endgerät gehörende (beispielsweise auch über ein Head-Set oder eine Autofreisprecheinrichtung etc mit dem Endgerät verbundene) Lautsprecher 3 empfängt über ein an sich bekanntes, nicht dargestelltes Mobilfunknetz und ein Endgerät akustisch auszugebene downlink-Daten x(t), welche sich in dem Fahrzeug oder Raum 4 ausbreiten und auch als z(t) vom Mikrofon 2 des Endgerätes (oder für das Endgerät) aufgenommen werden. Das Mikrofon 2 des Endgerätes empfängt also stark oder schwach vom Gesprächspartner des Nutzers 1 abgesandte und vom Lautsprecher 3 ausgegebene (downlink-) Daten sowie vom Nutzer 1 des Endgerätes (2, 3) als Sprache etc. ausgegebene Daten s(t) und überträgt die Summe etc der (vom Lautsprecher 3 ungewollt und vom Nutzer 1 gewollt aufgezeichneten) Daten als Signal y(t) in an sich bekannter Weise über ein Mobilfunkendgerät, eine Luftschnittstelle u.s.w. zum Mobilfunknetz und weiter zum Gesprächspartner des Teilnehmers 1. Der Gesprächspartner des Teilnehmers 1 nimmt deshalb ein Echo war, welches unterdrückt werden soll, da es die Sprachqualität verringert.

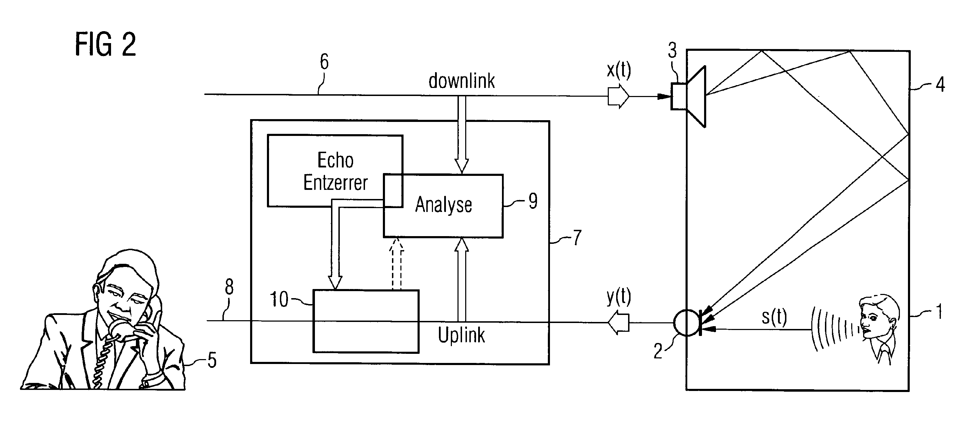

Figur 2 zeigt, wie durch Echo-Unterdrückungseinrichtungen (E-cho-Canceller) die vom Gesprächspartner 5 im downlink 6 in an sich bekannter Weise über ein Mobilfunknetz, eine Luftschnittstelle etc. zu einem Endgerät mit einem Lautsprecher 3 zu übertragenen downlink-Daten x(t) zur Echo-Verringerung verwendet werden.

Erfindungsgemäß werden über den downlink 6 übertragene downlink-Daten x(t) nicht nur an das Endgerät mit dem Lautsprecher 3 zur dortigen akustischen Ausgabe übertragen, sondern kopiert und es wird eine Kopie unabhängig von der Übertragung in Richtung des Endgerätes (3) auch in einem Echo-Entzerrer 7 analysiert und zur Reduktion (beispielsweise Subtraktion in bestimmten Zeitabschnitten) des Echos in über den uplink 8 zu übertragenen uplink-Daten y(t) nach der Analyse in einer Analyseeinrichtung 9 in einem Prozessor 10 verwendet.

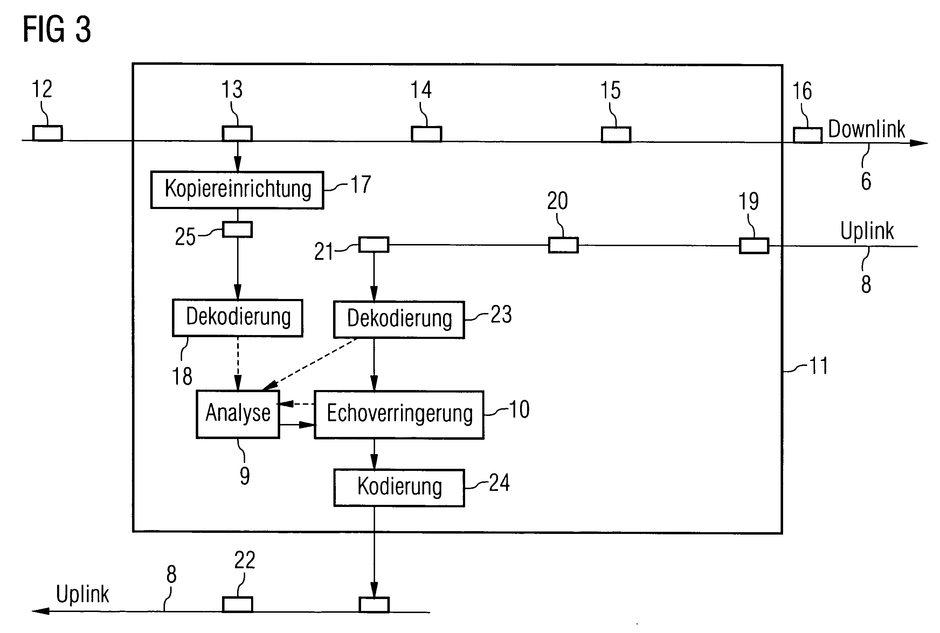

Figur 3 verdeutlicht, was hierbei in einer Echoverringerungseinrichtung 11 in einer (oder für eine) Vermittlungseinrichtung (MSC, Media Gateway etc.) eines Telekommunikationsnetzes (insbesondere Mobilfunknetzes) erfolgen kann. Datenpakete 12 bis 16 im downlink 6 werden von einer Kopiereinrichtung 17 kopiert und an eine Transcodierungseinrichtung 18 übertragen, welche die Dekodierung der downlink-Daten 13 von einem Mobilfunk-Codec- (etc.) Kodierformat in ein zur Echo-Entzerrung geeignetes Format (z.B. TDM) ausführt. Während die durch die Kopiereinrichtung 17 kopierten downlink-Daten in der Decodiereinrichtung 18 transcodiert werden, kann eine Kopie (bzw. das Original) der downlink-Daten bereits über den downlink 6 weiter in Richtung des Endgerätes übertragen werden, wodurch eine Verzögerung der Übertragung vermieden wird. Auch im uplink 8 zu übertragende Daten 19 bis 22 werden von einer Decodiereinrichtung 23 (aus einem Mobilfunk-Codec-Format wie AMR etc.) in ein zur Echo-Unterdrückung geeignetes Format umgewandelt. Die von einer Analyseeinrichtung 9 analysierten (davor transcodierten) downlink-stream-Daten-Kopieen werden von der Analyseeinrichtung 9 analysiert und in der Einrichtung 10 in beispielsweise an sich bekannter Weise zur Echo-Verringerung der über die Transcodiereinrichtung 23 transcodierten uplink-Daten verwendet. Hierauf werden die uplink-Daten, welche nun ein verringertes Echo oder im Idealfall kein Echo mehr haben von einer weiteren Umcodiereinrichtung (Transcodiereinrichtung) 24 wieder in ein anderes Format (bei Mobilfunk beispielsweise ein Mobilfunk-Codec-Format wie AMR oder ein beliebiges anderes Format) transcodiert und über den uplink 8 weiter an den Gesprächspartner 5 des Endgerät-Nutzers weitergeleitet.

## Patentansprüche

1. Verfahren zur Verringerung eines Echos in von einem Endgerät (2, 3) eines Telekommunikationsnetzes (6,8) kommenden uplink-Daten (19 bis 22),
wobei von vom Telekommunikationsnetz (6, 8) in Richtung des Endgeräts (3) zu übertragenden downlink-Daten (13) eine downlink-Daten-Kopie (25) erstellt wird, wobei eine downlink-Daten-Kopie (25) dekodiert (Transcoder 18) und zur Verringerung (10) des Echos in uplink-Daten (21) verwendet wird,
während downlink-Daten (13) in Richtung des Endgerätes (2, 3) übertragen werden (6).

2. Verfahren nach Anspruch 1, **dadurch gekennzeichnet,**
**dass** die downlink-Daten-Kopie (25) und die uplink-Daten (19 bis 22) dekodiert werden und ein Echo in den dekodierten uplink-Daten (19 bis 22) unter Berücksichtigung der dekodierten downlink-Daten-Kopie (25) entfernt wird.

3. Verfahren nach Anspruch 1 oder 2,
**dadurch gekennzeichnet,**
**dass** das Telekommunikationsnetz ein Mobilfunknetz, insbesondere ein zellulares Mobilfunknetz, ist
und **dass** das Endgerät ein Mobilfunkendgerät ist.

4. Verfahren nach einem der vorhergehenden Ansprüche,
**dadurch gekennzeichnet,**
**dass** zur Vermeidung von Verzögerungen durch Dekodieren und Codieren die downlink-Daten-Kopie (25) nur einmal umcodiert wird und insbesondere nicht rückcodiert werden in das ursprüngliche Format.

5. Verfahren nach einem der vorhergehenden Ansprüche,
**dadurch gekennzeichnet,**
**dass** die vom Endgerät (2, 3) kommenden uplink-Daten (19 bis 23) und die downlink-Daten in einem Mobilfunk-Codec-Format, insbesondere AMR-Format, codiert sind.

6. Verfahren nach einem der vorhergehenden Ansprüche,
**dadurch gekennzeichnet,**
**dass** die Übertragung im Telekommunikationsnetz zumindest teilweise paketorientiert, insbesondere über ATM, insbesondere über ATM-AAL-2-Verbindungen erfolgt.

7. Verfahren nach einem der vorhergehenden Ansprüche,
**dadurch gekennzeichnet,**
**dass** downlink-Daten jeweils zur Echounterdrückung in zeitlich nach ihnen in der Echoverringerungseinrichtung ankommenden, ein Echo dieser downlink-Daten enthaltenden uplink-Daten verwendet werden, um die Daten- Laufzeit insbesondere zum Endgerät und zurück und/ oder die akustisch Signallaufzeit von einem Lautsprecher zu einem Mikrofon zu berücksichtigen.

8. Vorrichtung (11) zur Verringerung von in über ein Telekommunikationsnetz (8, 6) zu übertragenden, von einem Mobilfunkendgerät (2, 3) kommenden uplink-Daten (19 bis 23), enthaltenen Echo,
- mit einer Kopiereinrichtung (17) zum Kopieren von an das Endgerät (3) zu sendenden downlink-Daten (13) in eine downlink-Daten-Kopie (25),
- mit einer Einrichtung (26) zum Weiterleiten der downlink-Daten in Richtung des Endgerätes (2, 3),
- mit einer Transcodiereinrichtung (18) zum Transcodieren der downlink-Daten-Kopie (25),
- mit einer Einrichtung (9) zum Analysieren der downlink-Daten-Kopie (25) für eine Echo-Unterdrückung in den uplink-Daten (21).
Verfahren nach Anspruch 1
**dadurch gekennzeichnet,**
**dass** das Telekommunikationsnetz ein Mobilfunknetz, insbesondere ein zellulares Mobilfunknetz, ist
und **dass** das Endgerät ein Mobilfunkendgerät ist.

9. Vorrichtung nach Anspruch 7,
**dadurch gekennzeichnet,**
**dass** die nur eine Einrichtung zum Umcodieren der downlink-Daten-Kopie (25) vorgesehen ist, aber keine Einrichtung zum Rücktranscodieren in das ursprüngliche Format.

10. Vorrichtung nach einem der Ansprüche 7 oder 8,
**dadurch gekennzeichnet,**
**dass** die vom Endgerät (2, 3) kommenden uplink-Daten (19 bis 23) in einem Mobilfunk-Codec-Format, insbesondere AMR-Format, codiert sind.

11. Vorrichtung nach einem der Ansprüche 7-9,
**dadurch gekennzeichnet,**
**dass** die Übertragung im Telekommunikationsnetz zumindest teilweise über ATM, insbesondere über ATM-AAL-2-Verbindungen erfolgt.

12. Vorrichtung nach einem der Ansprüche 8-10,
**dadurch gekennzeichnet,**
**dass** sie eine Verzögerungseinrichtung aufweist, durch die downlink-Daten jeweils zur Echounterdrückung in zeitlich nach ihnen in der Echoverringerungseinrichtung ankommenden, ein Echo dieser downlink-Daten enthaltenden uplink-Daten verwendet werden, um die Daten- Laufzeit insbesondere zum Endgerät und zurück und/ oder die akustisch Signallaufzeit von einem Lautsprecher zu einem Mikrofon zu berücksichtigen.
